# EUROPEAN PATENT SPECIFICATION

(11) **EP 3 654 433 B1**
(45) Date of publication and mention of the grant of the patent: **02.07.2025**
(21) Application number: 19209746.7
(22) Date of filing: 18.11.2019
(51) Int. Cl.: H01M 10/04, H01M 10/0587, H01M 50/531, H01M 50/54

(54) **ELECTRODE ASSEMBLY AND BATTERY HAVING THE SAME**
ELEKTRODENANORDNUNG UND BATTERIE DAMIT
ENSEMBLE D'ÉLECTRODE ET BATTERIE LE COMPRENANT

(30) Priority: 19.11.2018 CN 201811376277
(43) Date of publication of application: 20.05.2020
(73) Proprietor: NINGDE AMPEREX TECHNOLOGY LIMITED, Ningde City, Fujian Province 352100 (CN)
(72) Inventor: Xu, Hu, Fujian, 352100 (CN); Gong, Zuzhen, Fujian, 352100 (CN); Li, Zhixian, Fujian, 352100 (CN); Song, Huabing, Fujian, 352100 (CN)
(74) Representative: Icosa

(56) References cited:
- WO-A1-2018/066886
- KR-A- 20180 041 527
- US-A1- 2011 287 302
- US-A1- 2018 083 311

## Description

### FIELD

The present application relates to a field of electrochemical devices, more particularly to an electrode assembly and a battery having the same.

### BACKGROUND

At present, a conventional battery structure generally uses an adhesive layer to connect a cell with a package casing to prevent the cell from sliding relative to the package casing during the drop so as to prevent head and tail portions of the cell from colliding, which may otherwise result in deformation and hence a short circuit. A pull force generated during the drop acts on a single-sided anode area or on an uncoated aluminum foil of an outer layer of the cell, which will probably tear the aluminum foil. Additionally, in order to prevent the separator from folding during the drop, a few tapes are applied around the head and tail portions of the cell. But the tapes around the head and tail portions will also pull the aluminum foil, and hence have a high probability of tearing the aluminum foil. Many particles and burrs are produced after the aluminum foil is torn, and these particles and burrs probably pierce the separator, thereby leading to a short circuit between the aluminum foil and a copper foil or between a cathode and the copper foil, and eventually causing the cell to heat up and fail.

American patent application US2018/083311 discloses a rechargeable lithium battery including tape, an electrode assembly, and a case housing the electrode assembly. International patent application WO2018/066886 discloses an electrode assembly with an adhesive coating layer coated on the outer surface of the electrode assembly. Korean patent application KR 2018 0041527 discloses an electrode laminate in which electrodes and separators are alternately laminated and wound; and an adhesive binder layer surrounding an outer circumferential surface of the electrode laminate.

### SUMMARY

The present application aims to propose an electrode assembly and a battery including the electrode assembly, and the battery has an advantage of excellent safety performance. The invention is defined in claims 1 and 14. Preferred embodiments are defined in claims 2-13.

For the battery according to the present application, by providing the first area and the second area and connecting the first area with the second area, the adhesion of the second area to the battery is transferred to the first area during the drop of the battery. Therefore, the tear of the electrode assembly due to the drop, which may cause failure of the battery, is avoided.

### BRIEF DESCRIPTION OF THE DRAWINGS

These and/or additional aspects and advantages of embodiments of the present application will become apparent and more readily appreciated from the following descriptions made with reference to the drawings, in which:
Figs. 1-4 illustrate a front view, a rear view, a top view and a bottom view according to an embodiment of the present application respectively.
Fig. 5 illustrates a front view according to another embodiment of the present application.
Fig. 6 illustrates a bottom view according to the embodiment shown in Fig. 5.
Fig. 7 illustrates a front view according to another embodiment of the present application.
Fig. 8 illustrates a rear view according to the embodiment shown in Fig. 7.
Fig. 9 illustrates a top view according to the embodiment shown in Fig. 7.
Fig. 10 illustrates a top view according to another embodiment of the present application.
Fig. 11 illustrates a top view according to another embodiment of the present application.
Fig. 12 illustrates a front view according to another embodiment of the present application.
Fig. 13 illustrates a front view according to another embodiment of the present application.
Fig. 14 illustrates a front view according to another embodiment of the present application.
Fig. 15 illustrates a separator structure according to an embodiment of the present application.

### DETAILED DESCRIPTION

Embodiments of the present application will be described in detail and examples of the embodiments will be illustrated in the drawings, where same or similar reference numerals are used to indicate same or similar elements or elements with same or similar functions. The embodiments described herein with reference to drawings are explanatory, and only used to generally understand the present application. The embodiments shall not be construed to limit the present application.

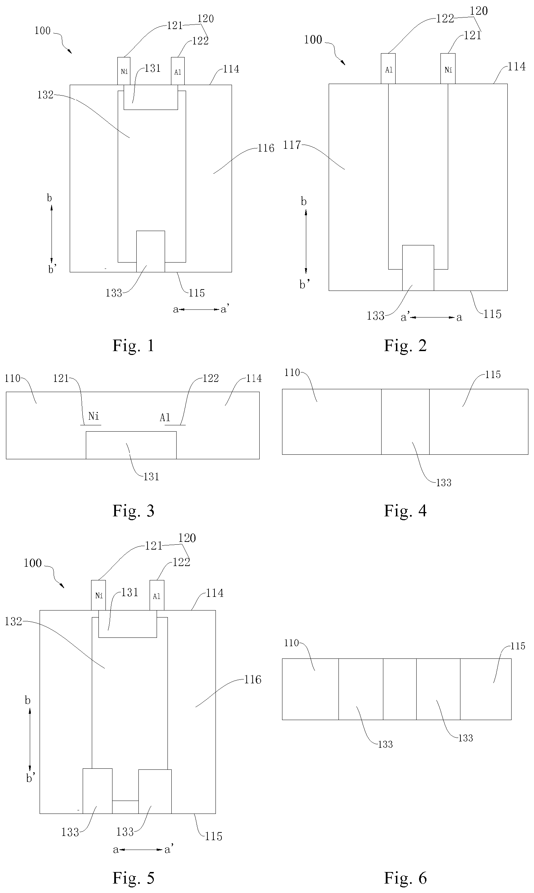

The electrode assemblies and batteries according to embodiments of the present application will be described with reference to Figs. 1-15.

Fig. 1 illustrates a front view of an electrode assembly 100 according to an embodiment of the present application. In this embodiment, the electrode assembly 100 includes a first electrode sheet and a second electrode sheet spaced apart from each other, and a separator is disposed between the first electrode sheet and the second electrode sheet. The first electrode sheet and the second electrode sheet are wound or stacked to form the electrode assembly. The electrode assembly 100 includes a first end portion 114, a second end portion 115, a first main plane 116, a second main plane 117, and a binding layer. The second end portion 115 and the first end portion 114 are arranged oppositely, and the first main plane 116 and the second main plane 117 are arranged oppositely. The binding layer includes a first area 131 and a second area 132; the first area 131 is arranged at the first end portion 114 while the second area 132 is arranged at the first main plane 116; the first area 131 winds around the first end portion 114 to connect to the second area 132.

By providing the first area 131 and the second area 132 and connecting the first area 131 with the second area 132, adhesion of the second area 132 to the battery is transferred to the first area 131 during the drop of the battery, to avoid tearing the electrode assembly 100 due to the drop, which may otherwise cause failure of the battery.

According to another embodiment of the present application, a part of the first area 131 may also be arranged at the separator or the first electrode sheet. Therefore an external force received during the use of the electrode assembly can be partially transferred to an interior of the electrode assembly 100 through the first area 131 which is connected to the second area 132. Optionally, the first area 131 may extend from the separator or the first electrode sheet, such that an external force received by the first area 131 can also be partially transferred to the interior of the electrode assembly 100.

According to an embodiment of the present application, a first adhesive layer can be provided to a first surface of the first area 131 close to the electrode assembly 100, such that the first area 131 adheres to the electrode assembly 100. By providing a first surface of the second area 132 close to the electrode assembly 100 with a second adhesive layer, the second area 132 can adhere to the electrode assembly 100. The first area 131 and the second area 132 can be connected by means of the first adhesive layer or the second adhesive layer, as well. Certainly, according to another embodiment of the present application, the second area 132 may be an extension of the first area 131 on the first main plane 116 of the electrode assembly 100.

Figs. 2-4 illustrate a rear view, a top view and a bottom view of the embodiment shown in Fig. 1, respectively. Referring to Fig. 3, a part of the first area 131 can be arranged at the separator or the first electrode sheet, or extend from the separator or the first electrode sheet, and be partially connected to the second area 132. Referring to Figs. 1-4, the first area 131 and the second area 132 can be partially overlapped and be connected.

Referring to Figs. 1-4, in the electrode assembly 100 according to an embodiment of the present application, the binding layer can further include a third area 133 arranged at the second end portion 115. The third area 133 has a first end arranged at the first main plane 116 and a second end arranged at the second main plane 117, that is, the third area 133 can be winded around the second end portion 115 to connect to the second area 132. Certainly, according to an embodiment of the present application, the third area 133 can be formed by extension of the separator or the first electrode sheet, and partially overlapped and connected to the second area 132.

In addition, the electrode assembly according to an embodiment of the present application can further include a tab 120 provided to the first end portion 114. The tab 120 can include a first tab 121 and a second tab 122, and the first tab 121 and the second tab 122 are both located at one side of the first end portion 114.

Referring to Fig. 1, in an a-a' direction, the first area 131 may have a width smaller than a width of the second area 132, and the third area 133 may have a width smaller than the width of the second area 132. For example, the width of the third area 133 may be 11 mm.

According to another embodiment of the present application, in the a-a' direction, the width of the first area 131 may be greater than the width of the second area 132, and the width of the third area 133 may be greater than the width of the second area 132.

Fig. 5 illustrates the electrode assembly 100 according to an embodiment of the present application. Different from the embodiment shown in Fig. 1, the binding layer includes two third areas 133 in this embodiment. The two third areas 133 are arranged in the a-a' direction shown in Fig. 5. Each of the third regions 133 is winded around the second end portion 115, and each third region 133 has a first end overlapping with and connecting to the second area 132. Moreover, in the a-a' direction, each of the third regions 133 may have a width smaller than the width of the second area 132. Fig. 6 shows a bottom view of the electrode assembly 100 according to the embodiment shown in Fig. 5, and illustrates two third areas 133.

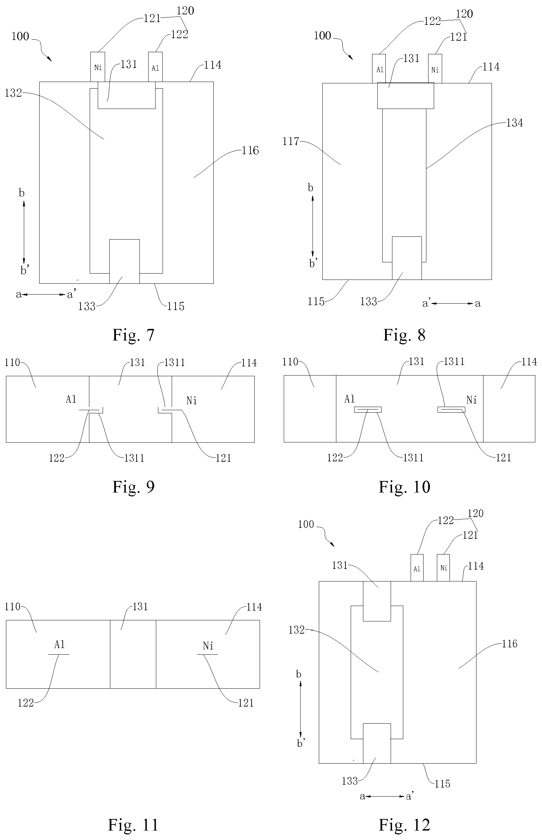

Figs. 7-9 illustrate the electrode assembly 100 according to another embodiment of the present application. Different from the embodiment shown in Fig. 1, the binding layer further includes a fourth area 134; the fourth area 134 is arranged at the second main plane 117, and overlaps with and adheres to a part of the first area 131 and a part of the third area 133, respectively.

According to an embodiment of the present application, a third adhesive layer can be provided to a first surface of the fourth area 134 close to the electrode assembly 100, such that the fourth area 134 adheres to the electrode assembly 100. A fourth adhesive layer can be provided to a second surface of the fourth area 134 away from the electrode assembly 100, and the fourth adhesive layer can be used to make the electrode assembly 100 adhere to a casing that accommodates the electrode assembly 100. Certainly, according to another embodiment of the present application, the fourth area 134 may be an extension of the first area 131 on the second main plane 117 of the electrode assembly 100; the fourth area 134 may be an extension of the third area 133 on the second main plane 117 of the electrode assembly 100.

Referring to Figs. 7-8, in the a-a' direction, the width of the third area 133 may be smaller than a width of the fourth area 134, and the width of the first area 131 may be greater than the width of the fourth area 134. According to another embodiment of the present application, the width of the third area 133 may be greater than the width of the fourth area 134, and the width of the first area 131 may be smaller than the width of the fourth area 134.

Referring to Fig. 9, in order to facilitate the arrangement of the tab 120, the first area 131 is provided with a through hole 1311. That is, when the width of the first area 131 is greater than a spacing between the tabs, the tab 120 can pass through the through hole 1311. The tab 120 partially or completely passes through the through hole 1311, that is, the through hole 1311 may be an open or closed hole. Fig. 10 illustrates a case where the tab 120 completely passes through the through hole 1311. Thus, the structure described above is applicable to a battery with a narrow spacing between the two tabs 120. Moreover, the operation is simple. Further, a tape is eliminated. And the energy density loss is little.

Fig. 11 illustrates another embodiment of the present application. According to Fig. 11, when the spacing between the tabs is relatively wide, the first area 131 can be arranged between the first tab 121 and the second tab 122, that is, orthographic projections of the first tab 121, the second tab 122 and the second area 132 on the first main plane 116 do not overlap.

Fig. 12 illustrates another embodiment of the present application. According to Fig. 12, when the spacing between the tabs is relatively narrow, the first tab 121 and the second tab 122 can be arranged at the same side of the first area 131.

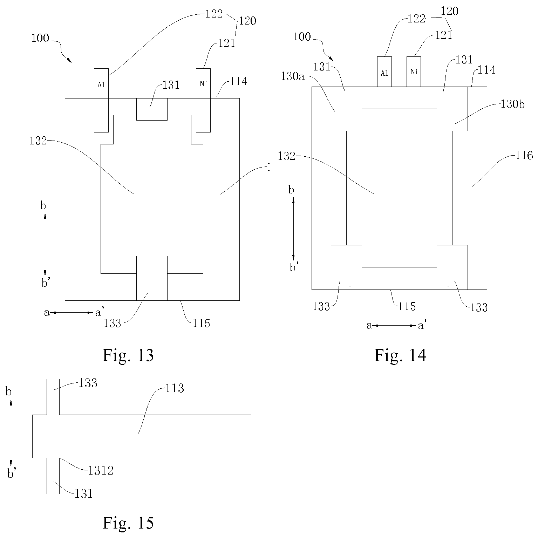

Fig. 13 illustrates the electrode assembly 100 according to another embodiment of the present application. In this embodiment, the second area 132 exhibits an irregular pattern (or abnormally shaped), which can be made by cutting a rectangular sheet. For example, the second area 132 is constructed by cutting a right angle of the rectangular sheet, and the orthographic projections of the first tab 121, the second tab 122 and the second area 132 on the first main plane 116 do not overlap, thereby reducing an overall thickness of the battery.

Fig. 14 illustrates the electrode assembly 100 according to another embodiment of the present application. In this embodiment, the first area 131 can include a first binding unit 130a and a second binding unit 130b, and the first binding unit 130a and the second binding unit 130b connect to the second area 132, respectively. The first binding unit 130a and the second binding unit 130b can be arranged at two sides of the tab 120; or at least one of the first binding unit 130a and the second binding unit 130b can be arranged between the first tab 121 and the second tab 122.

Reference throughout this specification to "an embodiment," "some embodiments," "an exemplary embodiment," "an example," "a specific example," or "some examples," means that a particular feature, structure, material, or characteristic described in connection with the embodiment or example is included in at least one embodiment or example of the present application. Thus, the appearances of the above phrases throughout this specification do not necessarily refer to the same embodiment or example. Furthermore, the particular features, structures, materials, or characteristics may be combined in any suitable manner in one or more embodiments or examples.

Although embodiments of the present application have been shown and described, it would be appreciated by those skilled in the art that various changes can be made to the embodiments of the present invention as long as they are within the scope of the current claims.

## Claims

1. An electrode assembly (100), comprising a first electrode sheet, a second electrode sheet, and a separator disposed therebetween, wherein the first electrode sheet and the second electrode sheet are wound or stacked to form the electrode assembly (100),
wherein the electrode assembly (100) comprises:
a first end portion (114) provided with a tab (120),
a second end portion (115) arranged opposite to the first end portion (114),
a first main plane (116),
a second main plane (117) arranged opposite to the first main plane (116), and
a binding layer comprising:
a first area (131) arranged at the first end portion (114), and
a second area (132) arranged at the first main plane (116),
wherein the first area (131) is connected to the second area (132) and
wherein the first area (131) is provided with a through hole (1311), and the tab (120) passes through the through hole (1311).

2. The electrode assembly (100) according to claim 1, wherein a part of the first area (131) is arranged at the separator or the first electrode sheet.

3. The electrode assembly (100) according to claim 2, wherein the first area (131) extends from the first electrode sheet or the separator.

4. The electrode assembly (100) according to any one of claims 1 to 3, wherein the first area (131) and the second area (132) partially overlap.

5. The electrode assembly (100) according to any one of claims 1 to 4, wherein the first area (131) comprises a first binding unit (130a) and a second binding unit (130b), and the first binding unit (130a) and the second binding unit (130b) are respectively connected to the second area (132).

6. The electrode assembly (100) according to any one of claims 1 to 5, wherein a first surface of the first area (131) close to the electrode assembly (100) is provided with a first adhesive layer.

7. The electrode assembly (100) according to any one of claims 1 to 6, wherein a first surface of the second area (132) close to the electrode assembly (100) is provided with a second adhesive layer.

8. The electrode assembly (100) according to any one of claims 1 to 7, wherein the binding layer further comprises a third area (133) arranged at the second end portion (115) and connected to the second area (132).

9. The electrode assembly (100) according to claim 8, wherein the third area (133) has a first end arranged at the first main plane (116) and a second end arranged at the second main plane (117).

10. The electrode assembly (100) according to claim 8 or 9, wherein the binding layer further comprises a fourth area arranged at the second main plane (117) and connected to the first area (131).

11. The electrode assembly (100) according to claim 10, wherein the fourth area (134) is connected to the third area (133).

12. The electrode assembly (100) according to claim 11, wherein a first surface of the fourth area (134) is provided with a third adhesive layer; and a second surface of the fourth area (134) is provided with a fourth adhesive layer;
wherein the first surface of the fourth area (134) faces the electrode assembly (100), and the second surface of the fourth area (134) faces away from the electrode assembly (100).

13. The electrode assembly (100) according to claim 12, wherein the third adhesive layer has an adhesion force different from an adhesion force of the fourth adhesive layer.

14. A battery, comprising:
an electrode assembly (100) according to any one of claims 1 to 13, and a casing accommodating the electrode assembly (100).

## Patentansprüche

1. Elektrodenbaugruppe (100), die ein erstes Elektrodenblatt, ein zweites Elektrodenblatt und einen dazwischen angeordneten Separator umfasst, wobei das erste Elektrodenblatt und das zweite Elektrodenblatt gewickelt oder gestapelt sind, um die Elektrodenbaugruppe (100) zu bilden, wobei die Elektrodenbaugruppe (100) Folgendes umfasst:
einen ersten Endabschnitt (114), der mit einem Steg (120) versehen ist,
einen zweiten Endabschnitt (115), der gegenüber dem ersten Endabschnitt (114) angeordnet ist,
eine erste Hauptebene (116),
eine zweite Hauptebene (117), die gegenüber der ersten Hauptebene (116) angeordnet ist, und
eine Bindeschicht, die Folgendes umfasst:
einen ersten Bereich (131), der am ersten Endabschnitt (114) angeordnet ist, und
einen zweiten Bereich (132), der an der ersten Hauptebene (116) angeordnet ist,
wobei der erste Bereich (131) mit dem zweiten Bereich (132) verbunden ist, und
wobei der erste Bereich (131) mit einem Durchgangsloch (1311) versehen ist und der Steg (120) durch das Durchgangsloch (1311) verläuft.

2. Elektrodenbaugruppe (100) nach Anspruch 1, wobei ein Teil des ersten Bereichs (131) am Separator oder dem ersten Elektrodenblatt angeordnet ist.

3. Elektrodenbaugruppe (100) nach Anspruch 2, wobei sich der erste Bereich (131) von dem ersten Elektrodenblatt oder dem Separator erstreckt.

4. Elektrodenbaugruppe (100) nach einem der Ansprüche 1 bis 3, wobei sich der erste Bereich (131) und der zweite Bereich (132) teilweise überlappen.

5. Elektrodenbaugruppe (100) nach einem der Ansprüche 1 bis 4, wobei der erste Bereich (131) eine erste Bindeeinheit (130a) und eine zweite Bindeeinheit (130b) umfasst und die erste Bindeeinheit (130a) und die zweite Bindeeinheit (130b) jeweils mit dem zweiten Bereich (132) verbunden sind.

6. Elektrodenbaugruppe (100) nach einem der Ansprüche 1 bis 5, wobei eine erste Oberfläche des ersten Bereichs (131) nahe der Elektrodenbaugruppe (100) mit einer ersten Klebeschicht versehen ist.

7. Elektrodenbaugruppe (100) nach einem der Ansprüche 1 bis 6, wobei eine erste Oberfläche des zweiten Bereichs (132) nahe der Elektrodenbaugruppe (100) mit einer zweiten Klebeschicht versehen ist.

8. Elektrodenbaugruppe (100) nach einem der Ansprüche 1 bis 7, wobei die Bindeschicht ferner einen dritten Bereich (133) umfasst, der am zweiten Endabschnitt (115) angeordnet und mit dem zweiten Bereich (132) verbunden ist.

9. Elektrodenbaugruppe (100) nach Anspruch 8, wobei der dritte Bereich (133) ein erstes Ende, das an der ersten Hauptebene (116) angeordnet ist, und ein zweites Ende, das an der zweiten Hauptebene (117) angeordnet ist, aufweist.

10. Elektrodenbaugruppe (100) nach Anspruch 8 oder 9, wobei die Bindeschicht ferner einen vierten Bereich umfasst, der an der zweiten Hauptebene (117) angeordnet und mit dem ersten Bereich (131) verbunden ist.

11. Elektrodenbaugruppe (100) nach Anspruch 10, wobei der vierte Bereich (134) mit dem dritten Bereich (133) verbunden ist.

12. Elektrodenbaugruppe (100) nach Anspruch 11, wobei eine erste Oberfläche des vierten Bereichs (134) mit einer dritten Klebeschicht versehen ist; und eine zweite Oberfläche des vierten Bereichs (134) mit einer vierten Klebeschicht versehen ist; wobei die erste Oberfläche des vierten Bereichs (134) der Elektrodenbaugruppe (100) zugewandt ist und die zweite Oberfläche des vierten Bereichs (134) von der Elektrodenbaugruppe (100) abgewandt ist.

13. Elektrodenbaugruppe (100) nach Anspruch 12, wobei die dritte Klebeschicht eine Haftkraft aufweist, die sich von einer Haftkraft der vierten Klebeschicht unterscheidet.

14. Batterie, die Folgendes umfasst:
eine Elektrodenbaugruppe (100) nach einem der Ansprüche 1 bis 13 und ein Gehäuse, das die Elektrodenbaugruppe (100) aufnimmt.

## Revendications

1. Un ensemble d'électrodes (100), comprenant une première feuille d'électrode, une deuxième feuille d'électrode et un séparateur disposé entre elles, la première feuille d'électrode et la deuxième feuille d'électrode étant enroulées ou empilées pour former l'assemblage d'électrodes (100),
dans lequel l'assemblage d'électrodes (100) comprend :
une première partie d'extrémité (114) pourvue d'une languette (120),
une deuxième partie d'extrémité (115) disposée à l'opposé de la première partie d'extrémité (114),
un premier plan principal (116),
un second plan principal (117) disposé à l'opposé du premier plan principal (116), et
une couche de liaison comprenant :
une première zone (131) disposée au niveau de la première partie d'extrémité (114), et
une deuxième zone (132) disposée sur le premier plan principal (116),
dans laquelle la première zone (131) est reliée à la deuxième zone (132) et
dans laquelle la première zone (131) est pourvue d'un trou de passage (1311),
et la languette (120) passe à travers le trou de passage (1311).

2. L'ensemble d'électrodes (100) selon la revendication 1, dans lequel une partie de la première zone (131) est disposée au niveau du séparateur ou de la première feuille d'électrode.

3. L'ensemble d'électrodes (100) selon la revendication 2, dans lequel la première zone (131) s'étend à partir de la première feuille d'électrode ou du séparateur.

4. L'ensemble d'électrodes (100) selon l'une des revendications 1 à 3, dans lequel la première zone (131) et la deuxième zone (132) se chevauchent partiellement.

5. L'ensemble d'électrodes (100) selon l'une quelconque des revendications 1 à 4, dans lequel la première zone (131) comprend une première unité de liaison (130a) et une deuxième unité de liaison (130b), et la première unité de liaison (130a) et la deuxième unité de liaison (130b) sont respectivement reliées à la deuxième zone (132).

6. L'ensemble d'électrodes (100) selon l'une des revendications 1 à 5, dans lequel une première surface de la première zone (131) proche de l'assemblage d'électrodes (100) est pourvue d'une première couche adhésive.

7. L'ensemble d'électrodes (100) selon l'une des revendications 1 à 6, dans lequel une première surface de la deuxième zone (132) proche de l'assemblage d'électrodes (100) est pourvue d'une deuxième couche adhésive.

8. L'ensemble d'électrodes (100) selon l'une quelconque des revendications 1 à 7, dans lequel la couche de liaison comprend en outre une troisième zone (133) disposée sur la deuxième partie d'extrémité (115) et reliée à la deuxième zone (132).

9. L'ensemble d'électrodes (100) selon la revendication 8, dans lequel la troisième zone (133) a une première extrémité disposée au niveau du premier plan principal (116) et une deuxième extrémité disposée au niveau du deuxième plan principal (117).

10. L'ensemble d'électrodes (100) selon la revendication 8 ou 9, dans lequel la couche de liaison comprend en outre une quatrième zone disposée au niveau du deuxième plan principal (117) et reliée à la première zone (131).

11. L'ensemble d'électrodes (100) selon la revendication 10, dans lequel la quatrième zone (134) est reliée à la troisième zone (133).

12. L'ensemble d'électrodes (100) selon la revendication 11, où une première surface de la quatrième zone (134) est pourvue d'une troisième couche adhésive ; et une deuxième surface de la quatrième zone (134) est pourvue d'une quatrième couche adhésive ; où la première surface de la quatrième zone (134) fait face à l'ensemble d'électrodes (100), et la deuxième surface de la quatrième zone (134) fait face à l'opposé de l'ensemble d'électrodes (100).

13. L'ensemble d'électrodes (100) selon la revendication 12, où la troisième couche adhésive a une force d'adhésion différente de la force d'adhésion de la quatrième couche adhésive.

14. Une batterie comprenant : un ensemble d'électrodes (100) selon l'une des revendications 1 à 13, et un boîtier accueillant l'assemblage d'électrodes (100).
